Europäisches Patentamt

European Patent Office

Office européen des brevets

(19)

(11) Veröffentlichungsnummer: **0 275 441**
**B1**

(12) **EUROPÄISCHE PATENTSCHRIFT**

(45) Veröffentlichungstag der Patentschrift: **30.01.91**

(51) Int. Cl.⁵: **B 23 B 31/02**

(21) Anmeldenummer: **87118003.0**

(22) Anmeldetag: **05.12.87**

(54) Spannvorrichtung.

(30) Priorität: **23.12.86 DE 3644091**
**20.05.87 DE 3716932**
**14.10.87 DE 3734699**

(43) Veröffentlichungstag der Anmeldung:
**27.07.88 Patentblatt 88/30**

(45) Bekanntmachung des Hinweises auf die
Patenterteilung:
**30.01.91 Patentblatt 91/05**

(84) Benannte Vertragsstaaten:
**AT BE CH DE ES FR GB IT LI LU NL SE**

(56) Entgegenhaltungen:
**EP-A-0 013 646**
**EP-A-0 123 220**
**EP-A-0 185 842**
**EP-A-0 204 671**
**GB-A-2 094 191**
**GB-A-2 127 333**
**GB-A-2 155 823**
**GB-A-2 164 276**

(73) Patentinhaber: **Hertel Aktiengesellschaft**
**Werkzeuge + Hartstoffe**
**Wehlauer Str. 71-73**
**D-8510 Fürth (DE)**

(72) Erfinder: **Glaser, Franz**
**Stadtweg 29**
**D-8500 Nürnberg (DE)**

(74) Vertreter: **Tergau, Enno**
**Patentanwälte Tergau & Pohl Postfach 11 93 47**
**Hefnersplatz 3**
**D-8500 Nürnberg 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Spannvorrichtung mit den im Oberbegriff des Anspruchs 1 aufgeführten Merkmalen.

Eine derartige Spannvorrichtung ist aus GB-A-20 94 191 bekannt. Diese weist einen Verriegelungskörper in einer durchgehenden, radialen Querausnehmung des Paßzapfens auf. Dieser ist an seinen Stirnenden mit Schrägflächen versehen, bei denen es sich um Kegelstumpfflächen handelt, die mit innenkegelförmigen Ausnehmungen in Druckschrauben zusammenwirken, die von außen radial durch den Ringflansch des Träger einschraubbar sind.

Nachteilig bei der bekannten Spannvorrichtung ist die Tatsache, daß zwischen den Innenkegelflächen der Druckschrauben und den Kegelstumpfflächen des Verriegelungskörpers allenfalls ein Linienkontakt besteht, der erheblich verschleißgefährdet und nur begrenzt sicher gegen im Betrieb unvermeidliche Schwingungseinwirkungen ist.

Diese Nachteile sind auch einer aus DE-B-11 83 341 bekannten Spannvorrichtung zu eigen. Bei dieser sind Kugeln durch Exzenter-Innenflächen eines auf dem Ringflansch um die Systemachse drehbar gelagerten Spannringes beaufschlagbar, durch den die Kugeln radial einwärts gegen den Verriegelungskörper gespannt werden. Dieser radial einwärts gerichtete, von den Kugeln ausgeübte Spanndruck wird durch die Schrägflächen an den Stirnenden des Verriegelungskörpers in eine axiale Spannrichtung umgelenkt. Diese Spannvorrichtung zeigt die oben erwähnten Nachteile, da sowohl der Spannring als auch die Schrägflächen des Verriegelungskörpers nur in einem Punktkontakt mit den Kugeln stehen.

Der Erfindung liegt die Aufgabe zugrunde, eine Spannvorrichtung der eingangs genannten Art so auszubilden, daß sie verschleißfest und schwingungssicher ist ohne Einbußen an Wiederholungsgenauigkeit und einfacher Manipulierbarkeit. Solche Spannvorrichtungen werden in automatisierten Werkzeugwechselsystemen eingesetzt, in denen der Träger in kurzen Zeitabständen unterschiedliche Werkzeuge mit hoher Standzeit und Wiederholgenauigkeit aufnehmen können muß. Diese Aufgabe wird durch den kennzeichnenden Teil des Anspruches 1 gelöst.

Durch die erfindungsgemäße Lösung ist im Bereich der einzelnen Glieder der Spannvorrichtung ein Flächenkontakt gewährleistet, der für eine hochgradige Schwingungsdämpfung und gleichzeitig für niedrige spezifische Flächendrücke sorgt.

Durch das Kennzeichnungsmerkmal des Anspruches 2 ist es möglich, die Spannvorrichtung von zwei Seiten in Radialrichtung von außen zu betätigen. Durch den kennzeichnenden Teil des Anspruches 3 ist die Spannvorrichtung nur immer von einer Druckschraube spannbar, was kostensparende Betätigungseinrichtungen für die automatische Spannvorrichtung ermöglicht.

Das Kennzeichnungsmerkmal des Anspruches 5 gewährleistet eine Gleichmäßigkeit der beidseitig auf den Verriegelungskörper einwirkenden Spanndrücke. Durch das Kennzeichnungsmerkmal des Anspruches 6 ist gewährleistet, daß der Verriegelungskörper beim Herausziehen des Zapfens aus der Paßbohrung des Trägers automatisch in eine Mittelstellung zurückgeschoben wird, in welcher der Herausziehvorgang nicht beeinträchtigt wird. Durch das Kennzeichnungsmerkmal des Anspruches 7 ist gewährleistet, daß der Verriegelungskörper bezüglich der Drehstellung seiner Längsachse immer funktionsfähig ist. Durch Anspruch 8 ist eine kostengünstige Herstellung des Verriegelungskörpers und der Querausnehmung gewährleistet.

Durch das Kennzeichnungsmerkmal des Anspruches 10 ist mit der Spannbewegung eine Verkeilung beider Teilkörper des Verriegelungskörpers innerhalb der Querbohrung möglich, was der Schwingungssicherheit besonders dienlich ist. Durch das Kennzeichnungsmerkmal des Anspruches 11 läßt sich die Spannvorrichtung auch in Axialrichtung beispielsweise von der Vorderseite des Werkzeuges her schließen und lösen. Durch das Kennzeichnungsmerkmal des Anspruches 14 wird wiederum die Schwingungsfestigkeit begünstigt. Das Merkmal des Anspruches 16 ermöglicht eine ungehinderte Einführung des Paßzapfens in die Paßbohrung, ohne daß ein etwa aus der Querausnehmung herausstehendes Ende des Verriegelungskörpers die Einschubbewegung behindert.

Die weiteren Erfindungsmerkmale lösen darauf basierende Probleme, daß die Kugeln frei drehbar in ihrer Lagerpfanne einliegen. Dies könnte nämlich zur Folge haben, daß sich bei entnommenem Werkzeug eine Kugel etwa unter äußeren mechanischen Einflüssen (Vibrationen, Erschütterungen u.dgl.) in eine Position dreht, in der ihre Kappungsfläche beispielsweise innerhalb der Lagerpfanne einliegt. Beim Schließen der Spannvorrichtung würde dann die Schrägfläche des Verriegelungskörpers nicht mehr von der Kappungsfläche, sondern von einem sphärischen Umfangsbereich der Kugeloberfläche punktuell beaufschlagt. Zum einen wäre damit eine einwandfreie Spannung des Werkzeuges im Halter nicht mehr gewährleistet; zum anderen bestünde die Gefahr, daß durch die punktuelle Belastung so hohe lokale Drücke an der Kugeloberfläche auftreten, daß die Kugel zerstört wird.

Zur Vermeidung dieser Nachteile sind die Merkmale des Anspruches 17 vorgesehen. Da somit die Kugel in gelöstem Zustand der Spannvorrichtung mit der Ebene ihrer Kappungsfläche selbsttätig in eine Parallellage zur Systemachse verbracht wird, steht die Kappungsfläche unabhängig von der Drehstellung der Druckschraube immer frontal zum Verriegelungskörper, wodurch ein unbehindertes Einführen des Paßzapfens und ein fehlerfreies Verspannen der Kappungsfläche mit der Schrägfläche des Verriegelungskörpers gewährleistet sind. Durch die angegebene Ruheposition der Kugelkappungsfläche ist ein Lösen und Schließen der Spannvorrichtung mit nur minimalem Verschiebeweg der Kugeln gegenüber dem Verriegelungskörper möglich. Bei der Verspannung selbst wird die Kugel durch die Beaufschlagung ihrer Kappungsfläche von der Schrägfläche des Verriegelungskörpers gegen das Moment des Rückstellelements aus der Ruheposition ausgelenkt.

Im Kennzeichen des Anspruches 18 ist eine konstruktiv vorteilhafte Ausgestaltung des Rückstellelementes und seiner Anbringung an der Kugel bzw. Druckschraube angegeben. Diese ist besonders einfach, da das Rückstellelement lediglich ein langgestrecktes Federteil nach Anspruch 19 eine langgestreckte Schraubenfeder ist, das mit seiner Länge in zwei Sackbohrungen in der Kugel bzw. der Lagerpfanne einliegt. Statt einer Schraubenfeder kann beispielsweise auch ein langgestreckter, federelastischer Kunststoffstab od.dgl. Verwendung finden.

Durch die Ausgestaltung nach Anspruch 20 kann die Kugel gegenüber der Lagerpfanne in allen seitlichen Raumrichtungen ausgelenkt werden, wobei unabhängig von der Auslenkrichtung immer ein Rückstellmoment auf die Kugel ausgeübt wird. Durch die trichter- oder kegelartige Aufweitung der beiden Sackbohrungen sind im Anlagebereich des Federteiles somit keine scharfen Ecken und Kanten vorhanden. Außerdem ist die Montage, insbesondere das Einführen des Federteils in die Sackbohrungen durch die Aufweitung sehr erleichtert.

Die in den kennzeichnenden Merkmalen der Ansprüche 21 bis 23 angegebenen Maßnahmen gelten einer Verbesserung des vom Federteil auf die Kugel ausgeübten Rückstellmomentes.

Durch eine Ausgestaltung der Spannvorrichtung nach Anspruch 24 wird das vom Federteil hervorgerufene Rückstellmoment ohne Verzug auf die Kugel übertragen. Durch die wechselseitige Anlage des Federteils auf seiner Gesamtlänge im Bereich der beiden Sackbohrungen in der Lagerpfanne und der Kugel wird die vom Federteil erzeugte Rückstellkraft nämlich auf dessen gesamter Länge direkt auf die Kugel übertragen.

Nach Anspruch 25 verlaufen die beiden Sackbohrungen konzentrisch zur Rotationsachse der Druckschraube bzw. der Kugel. Unter der Kugelrotationsachse ist dabei die Achse zu verstehen, die durch das Zentrum der Kappungsfläche verläuft und auf letzterer senkrecht steht. Durch die angegebene Konstruktion wird eine Montageerleichterung erzielt. Das langgestreckte Federteil braucht nämlich nur in die Sackbohrung der Kugel eingeführt und beide Bauteile dann zusammen in die Lagerpfanne eingedrückt zu werden. Das aus der Sackbohrung der Kugel herausstehende Ende des Federteils wird dabei geradlinig in die Sackbohrung der Lagerpfanne eingeführt. Die trichter- oder kegelartige Aufweitung der Sackbohrungen hat dazu den Vorteil, daß die Einführung besonders einfach möglich ist.

Die im Anspruch 26 angegebene Länge des Federteils wirkt sich wiederum positiv auf das erzeugbare Rückstellmoment aus, da dieses mit der Länge des Federteils wächst.

Die im Anspruch 27 angegebenen Merkmale dienen einer Verbesserung der Lagereigenschaften der Kugel in der Lagerpfanne. Durch die Öffnungen der beiden Sackbohrungen wird nämlich an sich die Lagerung der Kugel verschlechtert, insbesondere da die Öffnung der Kugelsackbohrung auf dem der Kugelkappungsfläche diametral gegenüberliegenden Oberflächenabschnitt liegt. Die wirksame Lagerfläche wird also vor allem in den Bereichen der Lagerung reduziert, in denen normalerweise die größten Lagerdrücke auftreten. Demnach ist es vorteilhaft, wenn der Überschneidungsbereich der Öffnungen der beiden Sackbohrungen einen minimalen Flächeninhalt und folglich eine Form aufweist, die im wesentlichen dem Querschnitt des Federteils entspricht.

Der Gegenstand der Erfindung wird anhand von in den Figuren dargestellten Ausführungsbeispielen näher erläutert. Es zeigen:

Fig. 1 einen Längsschnitt durch eine erste Ausführungsform der Erfindung,

Fig. 2 einen Schnitt entsprechend der Linie II-II in Fig. 1,

Fig. 3 einen Längsschnitt entsprechend Fig. 1 durch eine alternative Ausführungsform der Erfindung,

Fig. 4 einen Längsschnitt durch eine weitere Ausführungsform, bei der der Verriegelungskörper zweiteilig in Form zweier Teilkörper ausgebildet ist,

Fig. 5 und 5a vergrößerte perspektivische Darstellungen der Druckschrauben mit ihren Kugeln,

Fig. 6 eine Ausführungsform einer in Axialrichtung von der Werkzeugseite her betätigbaren Spannvorrichtung,

Fig. 7 eine Seitenansicht der Spannvorrichtung mit rückstellbaren Kugeln teilweise im Längsschnitt,

Fig. 8 eine Detaillängsschnittdarstellung aus Fig. 7 durch die Spannvorrichtung in gelöster Ruheposition und

Fig. 9 eine Detaillängsschnittdarstellung analog Fig. 8 durch die Spannvorrichtung in Spannposition.

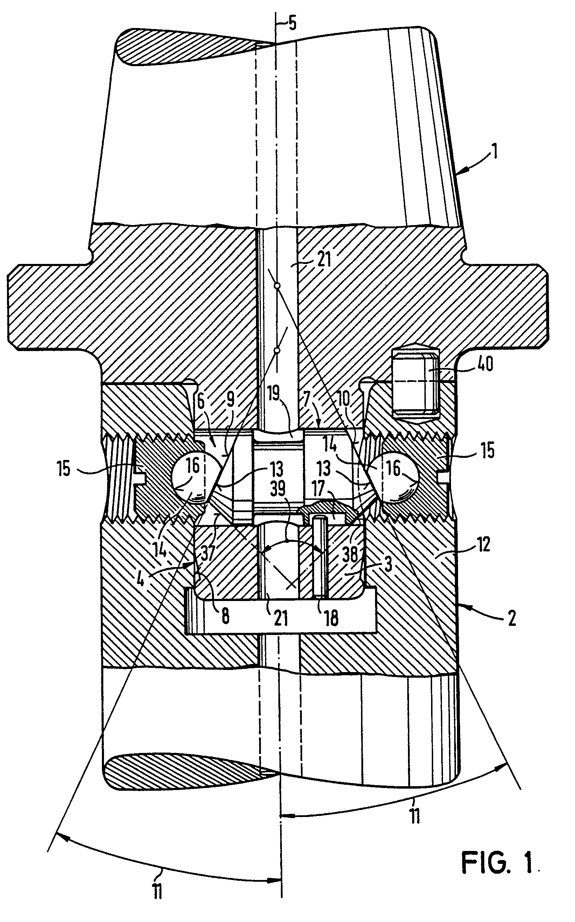

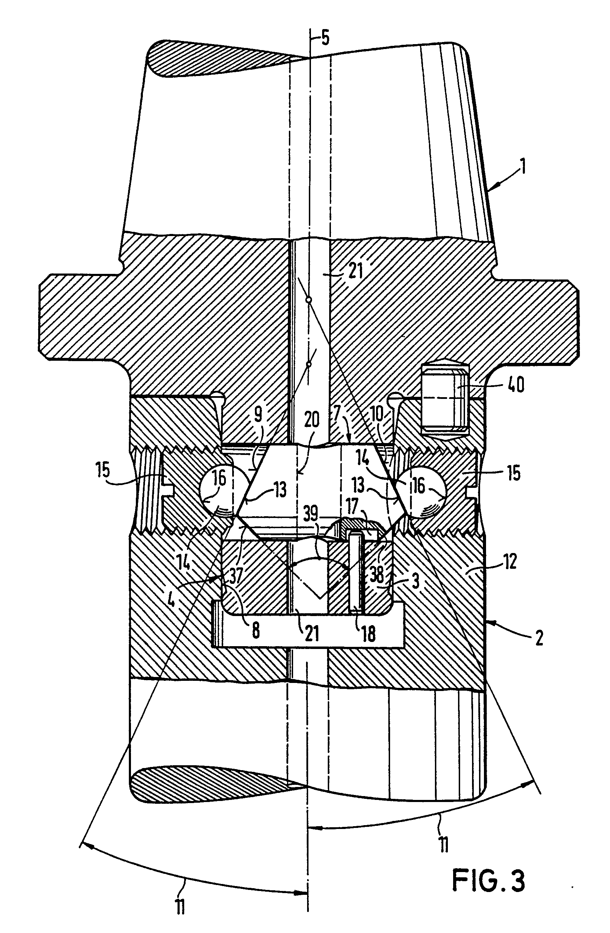

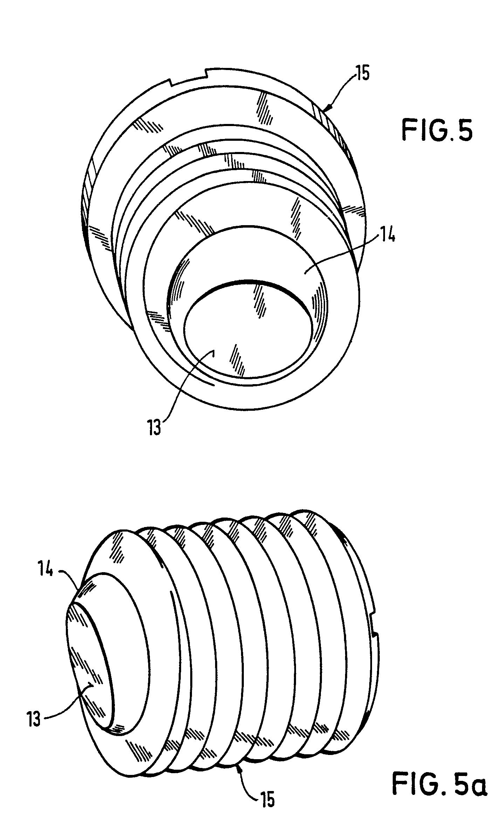

Die Spannvorrichtung gemäß Fig. 1-3 besteht im wesentlichen aus dem Schneidenträger, nachstehend kurz Werkzeug 1 genannt, und dem Träger 2, z.B. die Antriebsspindel einer Werkzeugmaschine. Das Werkzeug 1 ist mit einem rückwärtigen Paßzapfen 3 in eine achsgleiche Paßbohrung 4 des Trägers 2 einsteckbar und dort durch Sperrglieder sowohl gegen eine Axialbewegung in Richtung der Systemachse 5 als auch gegen eine Drehbewegung um die Systemachse 5 festlegbar. Das Sperrglied ist dabei mindestens ein in einer durchgehenden radialen Querausnehmung 6 des Paßzapfens 3 in Radialrichtung verschiebbarer Verriegelungskörper 7. Der Verriegelungskörper 7 ist an seinen beiden der Innenwand 8 der Paßbohrung 4 zugewandten Stirnenden mit jeweils einer ebenen Schrägfläche 9, 10 versehen, die jeweils mit der Systemachse 5 einen sich in Richtung auf das Werkzeug 1 hin schließenden, spitzen Winkel 11 bilden. Jede Schrägfläche 9, 10 ist von der Druckfläche eines radial in den die Paßbohrung 4 umgebenden Ringflansch 12 einschraubbaren Druckkörpers beaufschlagt. Diese Druckfläche ist die Kappungsfläche 13 einer Kugel 14. Jede Kugel 14 ist in einer Lagerpfanne 16 am stirnseitigen Ende einer von außen radial durch den Ringflansch hindurchschraubbaren Druckschraube 15 flächig abgestützt und liegt in dieser unverlierbar gehalten ein. (Fig.5, 5a)

Die von den beiden Schrägflächen 9, 10 mit der Achse der Paßbohrung 4 bzw. der Systemachse 5 gebildeten Winkel 11 sind gleich groß.

Der Verriegelungskörper 7 ist nur begrenzt in Längsrichtung der Querausnehmung 6 verschiebbar derart, daß er ausschließlich mit einer Schrägfläche 9 bzw. 10 radial über den Paßzapfen 3 hinausstehen kann. Dazu ist am äußeren Umfang des Verriegelungskörpers 7 eine Längsnut 17 von begrenzter Länge angeordnet, in die ein mit dem Paßzapfen 3 fest verbundener, in Richtung der Systemachse 5 weisender Stift 18 hineinragt. Durch Anschlag an die Enden der Längsnut 17 wird die Begrenzung des Verschiebewegs bewerkstelligt. Der Verriegelungskörper 7 ist weiterhin undrehbar in der Querausnehmung 6 geführt. Die Querausnehmung 6 kann eine Bohrung und der Verriegelungskörper 7 kann ein zylindrischer Bolzen sein.

Der Verriegelungskörper 7 ist mittig mit einer Ringnut 19 versehen oder in Längsrichtung der Systemachse 5 von einer Durchgangsbohrung 20 durchsetzt, die mit einer axialen Kühlmittelbohrung 21 im Paßzapfen 3 in Überdeckung steht.

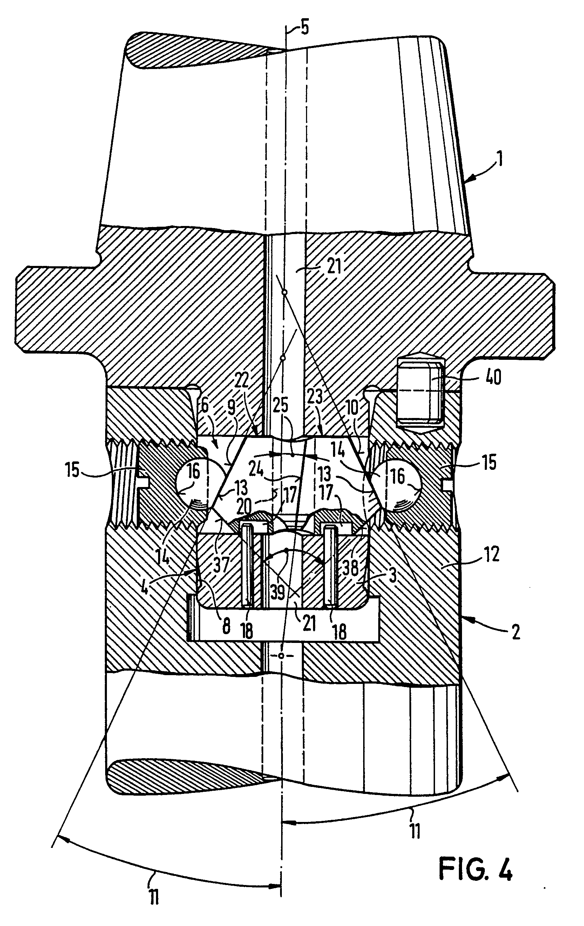

Bei der Ausführungsform gemäß Fig. 4 ist der Verriegelungskörper zweigeteilt, wobei jedem Teilkörper 22, 23 eine Schrägfläche 9, 10 zugeordnet ist und die Teilungsebenen 24 beider Teilkörper 22, 23 einen spitzen Winkel 25 mit der Systemachse 5 bzw. der Längsachse der Paßbohrung 4 bilden und aneinanderliegen.

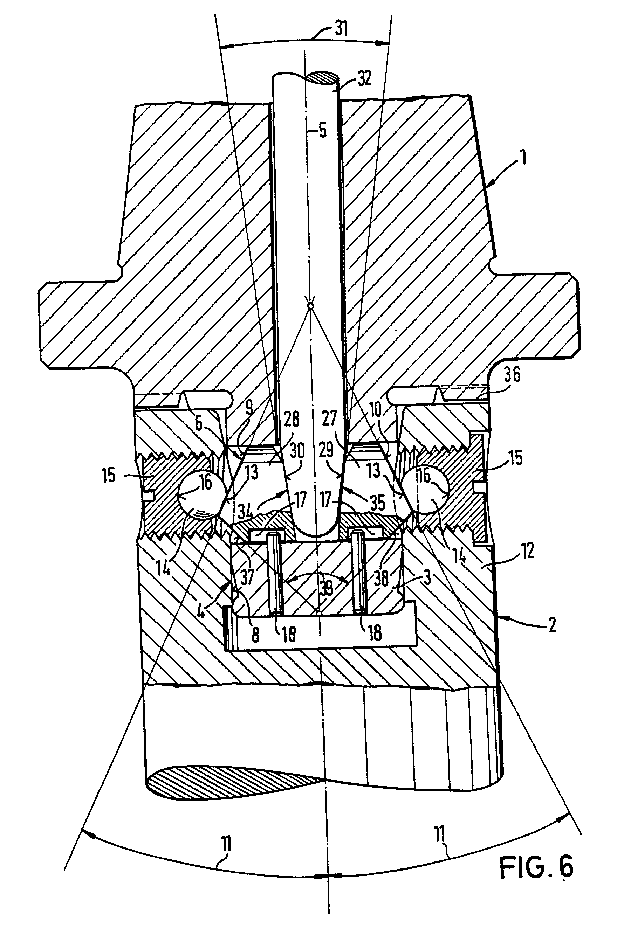

Bei der Ausführungsform gemäß Fig. 6 ist ebenfalls der Verriegelungskörper zweigeteilt. Er besteht aus den Teilkörpern 27, 28, deren einander zugewandte Teilungsflächen 29, 30 miteinander einen spitzen Winkel 31 bilden, der sich in Richtung auf das Werkzeug 1 öffnet. Die Teilungsflächen 29, 30 der Teilkörper 27, 28 sind durch ein keilartiges, in Richtung der Systemachse 5 längsverschieblich antreibbares Spannglied 32 auseinanderspreizbar.

Im Falle des Ausführungsbeispieles gemäß Fig. 6 liegen die Keilflächen 34, 35 des Spanngliedes 32 gleichebig auf den einander zugewandten Teilungsflächen 29, 30 der Verriegelungskörper 27, 28 auf. Die Keilzwischenlage des Spanngliedes 32 zwischen den Verriegelungskörpern 28, 29 kann selbsthemmend sein; dann muß zum Zurückziehen des Spanngliedes 32 aus seiner Klemmstellung ein ausreichender Druck vorhanden sein.

Bei der Ausführungsform gemäß Fig. 6 ist ein zusätzliches Sperrglied zur Festlegung gegen eine Drehbewegung vorhanden. Es ist dies eine Hirth-Verzahnung 36, die im Bereich der axialen Anlagefläche zwischen Ringflansch 12 des Trägers 2 und der Gegenfläche des Werkzeugs 1 angeordnet ist.

Die Stirnenden des Verriegelungskörpers 7 bzw. der Teilkörper 22, 23 bzw. 27, 28 sind auf ihrer dem Werkzeug 1 abgewandten Seite mit Gegenschrägen 37, 38 versehen, die einen vorzugsweise spitzen Winkel 39 bilden, der sich in Richtung auf das Werkzeug hin öffnet. Die Gegenschrägen 37, 38 schieben den Verriegelungskörper 7 beim Einführen des Paßzapfens 3 in seine Mittelstellung.

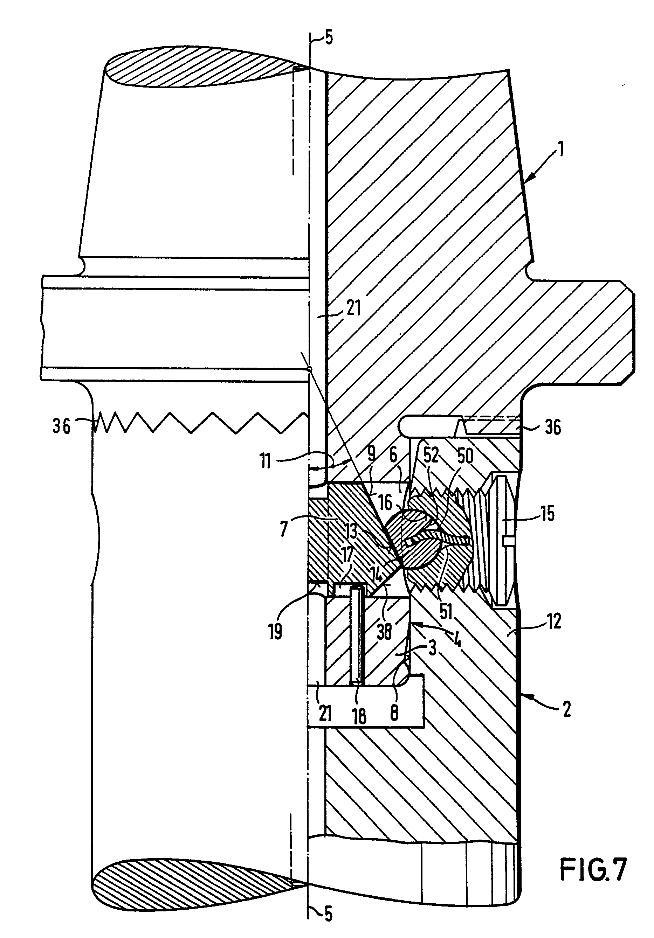

Bei den Ausführungsformen gemäß Fig. 1 - 4 erfolgt die Spannung der Spanneinrichtung durch Einschrauben mindestens einer der beiden Druckschrauben 15 von der Außenseite der Träger 2 her. Dabei legen sich die Kugeln 14 mit ihren Kappungsflächen 13 an die Schrägflächen 9, 10 des Verriegelungskörpers 7 oder der Teilkörper 22, 23 (Fig. 4) bzw. 27, 28 (Fig. 6) an und erzeugen dadurch einen axialen Druck auf den Paßzapfen 3 in Richtung auf das Innere der Paßbohrung 4. Die Verdrehsicherung zwischen Träger 2 und Werkzeug 1 kann durch einen Paßzapfen 40 (Fig. 1, 3 und 4) oder durch eine Hirth-Verzahnung (Plankerbverzahnung) 36 (Fig. 6-9) verbessert werden, die im Bereich der axialen Anlagefläche zwischen Ringflansch 12 des Trägers 2 und der Gegenfläche des Werkzeugs 1 wirksam sind. Ein Lösen der Spannverbindung ist durch Lösen derselben Druckschraube 15 möglich, die vorher gespannt worden ist. Durch das Herausziehen des Paßzapfens 3 aus der Paßbohrung 4 schieben sich infolge der Schrägflächen 9, 10 automatisch der Verriegelungskörper 7 bzw. seine Teilkörper 22, 23 wieder in eine Mittelstellung in der Querausnehmung 6 zurück, in der eine Entnahme ungehindert möglich ist.

Im Falle des Ausführungsbeispiels von Fig. 6 kann das Spannen und Lösen außer durch das Anziehen beider Druckschrauben 15 auch durch das Vorschieben und Zurückziehen des Spanngliedes 32 erfolgen.

Wenn vorstehend davon gesprochen ist, daß der Paßzapfen 3 mit dem Werkzeug 1 verbunden und die Paßbohrung 4 Teil des Trägers 2 sind, so ist auch eine kinematisch umgekehrte Zuordnung von Paßzapfen 3 bzw. Paßbohrung 4 ohne Änderung des Erfindungsgedankens möglich. Durch die Erfindung wird eine in jedem Falle in Richtung der Systemachse 5 kurze Bauweise der Spannvorrichtung begünstigt.

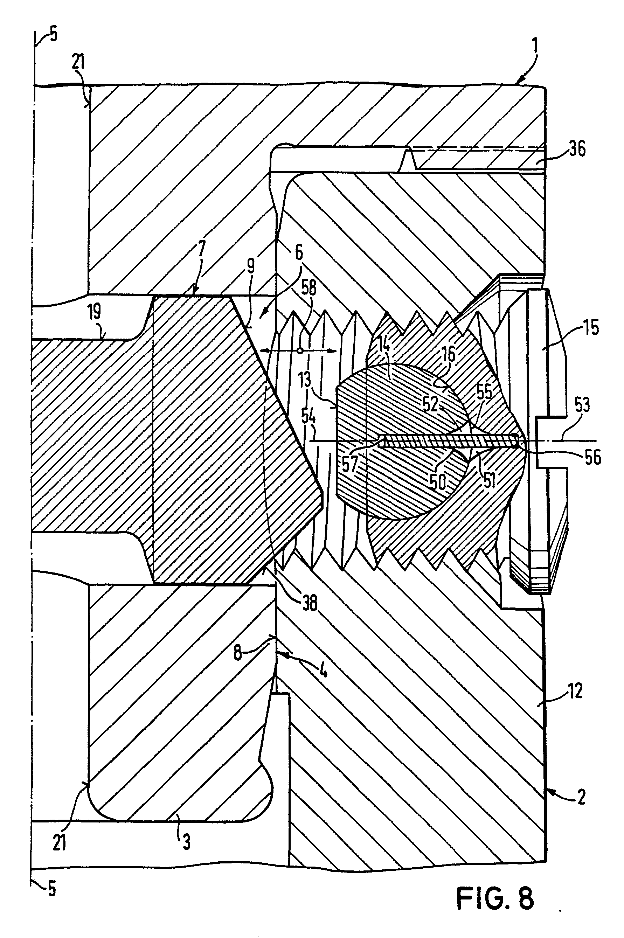

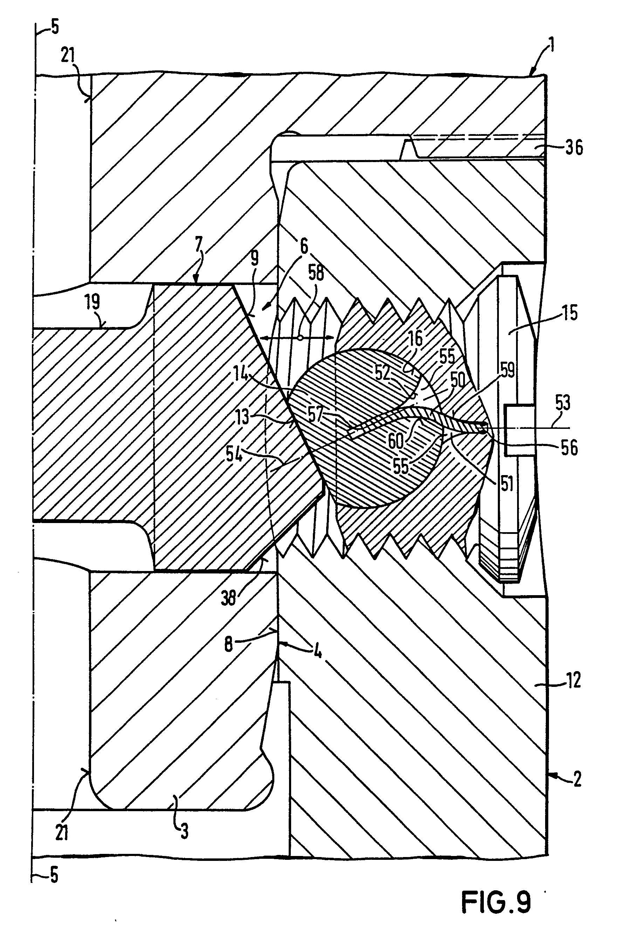

Zwischen den Kugeln 14 und ihrer zugehörigen Druckschraube 15 ist eine Einrichtung wirksam, die die Kugeln 14 bei gelöster Druckschraube 15 in eine Ausgangsstellung zurückstellt, in der die Kappungsfläche 13 parallel zur Systemachse 5 ausgerichtet ist. Diese insbesondere in Fig. 8 und 9 dargestellte Rückstellvorrichtung besteht aus einer langgestreckten Schraubenfeder 50, die mit ihrer Länge in zwei Sackbohrungen 51, 52 in der Lagerpfanne 16 der Druckschraube 15 bzw. der Kugel 14 einliegt. Die beiden Sackbohrungen 51, 52 liegen jeweils konzentrisch zu den Rotationsachsen 53, 54 von Druckschraube 15 bzw. Kugel 14. Die Rotationsachse 54 der Kugel 14 ist die Achse, die durch den Mittelpunkt der Kappungsfläche 13 verläuft und rechtwinklig zu dieser angeordnet ist. Weiterhin sind die beiden Sackbohrungen 51, 52 sich in Richtung ihrer Öffnungen 55 trichterartig aufweitend ausgebildet. An ihrem Grund entspricht der Durchmesser der Sackbohrungen 51, 52 dem der Schraubenfeder 50. Wie aus einem Vergleich der Fig. 8 und 9 miteinander hervorgeht, ist die Schraubenfeder 50 an ihrem druckschraubenseitigen Ende 56 in der Sackbohrung 52 beispielsweise durch Verklebung festgelegt. Die Festlegung kann natürlich auch im umgekehrten Sinn am anderen Ende erfolgen. Das kugelseitige Ende 57 liegt frei in der Sackbohrung 51 ein. Wie aus Fig. 8 deutlich wird, entspricht die Länge der Schraubenfeder 50 im wesentlichen der Summentiefe der beiden Sackbohrungen 51, 52.

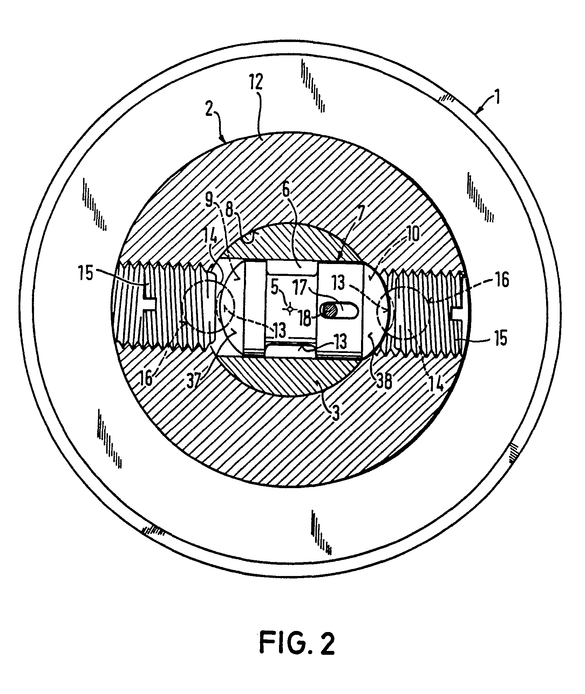

Die Kugel 14 ist mit ihrer Kappungsfläche 13 der Schrägfläche 9 zugewandt, wobei die Kappungsfläche 13 rechtwinklig zur Relativverschieberichtung 58 und parallel zur Systemachse 5 ausgerichtet ist. Die beiden Sackbohrungen 51, 52 liegen mit ihren Öffnungen 55 deckungsgleich. Das Schließen der Spannvorrichtung erfolgt durch Einschrauben mindestens einer der beiden Druckschrauben 15 von der Außenseite des Trägers 2 her. Dabei legen sich die Kugeln 14 mit ihren Kappungsflächen 13 an die Schrägflächen 9 des Verriegelungskörpers 7 an und erzeugen dadurch einen axialen Druck auf den Paßzapfen 3 in Richtung auf das Innere der Paßbohrung 4. Bei der Auslenkung der Kugel 14 gegenüber der Lagerpfanne 16 wird die Schraubenfeder 50 in den beiden Sackbohrungen 51, 52 deformiert und insbesondere seitlich ausgelenkt. Dadurch erzeugt die Schraubenfeder 50 ein Rückstellmoment, da sie eine Tendenz zur Streckung zeigt. Wird die Spannvorrichtung durch Relativverschiebung von Verriegelungskörper 7 und Kugel 14 zueinander wieder gelöst, so wird durch Kontraktion der Schraubenfeder 50 die Kugel 14 in die in Fig. 2 gezeigte Ruheposition zurückgestellt, in der die Kappungsfläche 13 rechtwinklig zur Relativverschieberichtung 58 bzw. parallel zur Systemachse 5 angeordnet ist. Wie in Fig. 9 gezeigt, liegt die Schraubenfeder 50 in Spannposition von Kugel 14 und Verriegelungskörper 7 auf ihrer Gesamtlänge im Bereich der beiden Sackbohrungen 51, 52 an sich wechselseitig gegenüberliegenden Seitenwänden 59, 60 der beiden Sackbohrungen 51, 52 an. Dabei weisen die Öffnungen 55 der beiden Sackbohrungen einen Überschneidungsbereich auf, dessen Flächeninhalt und Form im wesentlichen dem Querschnitt der Schraubenfeder 50 entspricht.

Bezugszeichenliste

1 Werkzeug
2 Träger
3 Paßzapfen
4 Paßbohrung
5 Systemachse
6 Querausnehmung
7 Verriegelungskörper
8 Innenwand
9 Schrägfläche
10 Schrägfläche
11 spitzer Winkel
12 Ringflansch
13 Kappungsfläche
14 Kugel
15 Druckschraube
16 Lagerpfanne
17 Längsnut
18 Zapfen
19 Ringnut
20 Durchgangsbohrung
21 Kühlmittelbohrung
22 Teilkörper
23 Teilkörper
24 Teilungsebene
25 spitzer Winkel
26
27 Teilkörper
28 Teilkörper
29 Teilungsfläche
30 Teilungsfläche
31 spitzer Winkel
32 Spannglied
33 Keilglied
34 Keilfläche
35 Keilfläche
36 Hirth-Verzahnung
37 Gegenschräge
38 Gegenschräge
39 spitzer Winkel
40 Paßzapfen
41 spitzer Winkel
50 Schraubenfeder
51 Sackbohrung
52 Sackbohrung
53 Rotationsachse
54 Rotationsachse
55 Öffnung
56 druckschraubenseitiges Ende
57 kugelseitiges Ende
58 Relativverschieberichtung
59 Seitenwand
60 Seitenwand

**Patentansprüche**

1. Spannvorrichtung zum Einspannen von Werkzeugen (1) in einen Träger (2), insbesondere in einen Revolverkopf oder in eine Antriebsspindel einer Werkzeugmaschine, bei der das Werkzeug (1) mit einem rückwärtigen Paßzapfen (3) in eine von einem Ringflansch (12) umgebene, die Systemachse (5) als Bohrungsachse enthaltene Paßbohrung (4) des Trägers (2) einsteckbar und darin durch Sperrglieder festspannbar ist, wozu ein an seinen Stirnenden mit Schrägflächen (9, 10) versehener Verriegelungskörper (7) in einer durchgehenden radialen Querausnehmung (6) des Paßzapfens (3) in Radialrichtung verschiebbar gelagert ist, dessen beide Schrägflächen (9, 10) mit der Systemachse (5) jeweils einen sich in Richtung auf das zu spannende Werkzeug (1) hin schließenden, spitzen Winkel (11) bilden, wobei zum Spannen mindestens eine von außen radial durch den Ringflansch (12) hindurchschraubbare Druckschraube vorgesehen ist, dadurch gekennzeichnet,

daß zum Spannen des Werkzeuges (1) mindestens eine der beiden eben ausgebildeten Schrägflächen (9, 10) des Verriegelungskörpers (7) durch eine in Axialrichtung unverschiebbar, in Radialrichtung beweglich gehaltene Kugel (14) beaufschlagbar ist, die

am stirnseitigen Ende der Druckschraube (15) drehbar in einer Lagerpfanne (16) abgestützt ist und dort unverlierbar einliegt und

die ebene Schrägfläche (9, 10) mit einer ebenen Kappungsfläche (13) beaufschlagt (Fig. 1, 2).

2. Spannvorrichtung nach Anspruch 1, dadurch gekennzeichnet,

daß zwei Kugeln (14) am stirnseitigen Ende zweier von außen radial durch den Ringflansch (12) hindurchschraubbaren Druckschrauben (15) angeordnet sind und dort unverlierbar einliegen.

3. Spannvorrichtung nach Anspruch 2, dadurch gekennzeichnet,

daß eine der beiden Druckschrauben (15) in Einschraubstellung stoffschlüssig mit dem Ringflansch (12) verbunden, insbesondere verklebt ist.

4. Spannvorrichtung nach einem der Ansprüche 1 bis 3, dadurch gekennzeichnet,

daß die Druckschraube (15) ein in der Umfangsfläche des Ringflansches (12) versenkbarer Gewindestift ist.

5. Spannvorrichtung nach Anspruch 1, dadurch gekennzeichnet,

daß die von den beiden Schrägflächen (9, 10) mit der Systemachse (5) jeweils gebildeten beiden Winkel (11) gleich groß sind.

6. Spannvorrichtung nach Anspruch 5, dadurch gekennzeichnet,

daß der Verriegelungskörper (7) nur begrenzt in Längsrichtung der Querausnehmung (6) verschiebbar ist derart, daß er ausschließlich mit nur einer Schrägfläche (9 oder 10) radial über den Paßzapfen (3) hinausstehen kann.

7. Spannvorrichtung nach Anspruch 6, dadurch gekennzeichnet,

daß der Verriegelungskörper (7) verdrehsicher in der Querausnehmung (6) in Radialrichtung verschiebbar gelagert ist.

8. Spannvorrichtung nach Anspruch 7, dadurch gekennzeichnet,

daß die Querausnehmung (6) eine Bohrung und der Verriegelungskörper (7) ein zylindrischer Bolzen ist.

9. Spannvorrichtung nach einem oder mehreren der vorhergehenden Ansprüche, dadurch gekennzeichnet,

daß der Verriegelungskörper (7) mittig mit einer Ringnut (19) versehen oder radial von einer Durchgangsbohrung (20) durchsetzt ist,

die mit einer axialen Kühlmittelbohrung (21) im Paßzapfen (3) in Überdeckung steht. (Fig. 1, 3)

10. Spannvorrichtung nach einem oder mehreren der vorhergehenden Ansprüche, dadurch gekennzeichnet,

daß der Verriegelungskörper (7) zweigeteilt ist, wobei jedem Teilkörper (22, 23) an seiner Außenseite eine Schrägfläche (9,10) zugeordnet ist und die Teilungsebenen (24) beider Teilkörper (22, 23) einen spitzen Winkel (25) mit der Längsachse (5) der Paßbohrung (4) bilden sowie aneinanderliegen. (Fig. 4)

11. Spannvorrichtung nach einem der Ansprüche 1 bis 9, dadurch gekennzeichnet,

daß der Verriegelungskörper (7) zweiteilig ist und daß die einander zugewandten Teilungsflächen (29, 30) miteinander einen spitzen Winkel (31) bilden sowie durch ein keilartiges, in Axialrichtung des Paßzapfens (3) längsverschiebliches Spannglied (32) auseinanderspreizbar sind.

12. Spannvorrichtung nach Anspruch 11, dadurch gekennzeichnet,

daß die Teilungsflächen (29, 30) miteinander einen sich in Richtung auf das Werkzeug (1) öffnenden spitzen Winkel (31) bilden.

13. Spannvorrichtung nach Anspruch 11 oder 12, dadurch gekennzeichnet,

daß die Keilflächen (34, 35) des Spanngliedes (32) gleichebig auf den einander zugewandten Teilungsflächen (29, 30) der Verriegelungskörper (27, 28) aufliegen. (Fig. 6)

14. Spannvorrichtung nach einem der Ansprüche 11 bis 13, gekennzeichnet durch

eine Selbsthemmung der Keilzwischenlage des Spanngliedes (32) zwischen den Verriegelungskörpern (28, 29).

15. Spannvorrichtung nach einem oder mehreren der vorhergehenden Ansprüche, dadurch gekennzeichnet,

daß zur Festlegung gegen eine relative Verdrehung eine Hirth-Verzahnung (Plankerbverzahnung) (36) im Bereich der axialen Anlagefläche zwischen Ringflansch (12) des Trägers (2) und Gegenfläche des Werkzeugs (1) angeordnet ist. (Fig. 7)

16. Spannvorrichtung nach einem oder mehreren der vorhergehenden Ansprüche, dadurch gekennzeichnet,

daß die Stirnenden des Verriegelungskörpers (7) bzw. der Teilkörper (22, 23; 27, 28) des Verriegelungskörpers auf ihrer dem Werkzeug abgewandten Seite mit Gegenschrägen (37, 38) versehen sind, die sich in Richtung auf das Werkzeug (1) öffnen. (Fig. 1, 3, 4, 6)

17. Spannvorrichtung nach einem oder mehreren der vorhergehenden Ansprüche, dadurch gekennzeichnet,

daß zwischen Druckschraube (15) und Kugel (14) ein federelastisches Rückstellelement wirksam ist, welches in gelöstem Zustand der Spannvorrichtung die Kugel (14) mit der Ebene ihrer Kappungsfläche (13) etwa parallel zur Systemachse (5) ausrichtet. (Fig. 7, 8, 9)

18. Spannvorrichtung nach Anspruch 17, dadurch gekennzeichnet,

daß das Rückstellelement ein langgestrecktes, bei Biegebeanspruchung ein Rückstellmoment in Streckrichtung erzeugendes Federteil (50) ist, das mit beiden Enden in je einer Sackbohrung (51, 52) der Kugel (14) und der Lagerpfanne (16) einliegt, die in Ruheposition der Kugel (14) achsgleich ineinandermünden.

19. Spannvorrichtung nach Anspruch 18, dadurch gekennzeichnet,

daß das Federteil (50) eine Schraubenfeder ist.

20. Spannvorrichtung nach Anspruch 18 oder 19, dadurch gekennzeichnet,

daß die beiden Sackbohrungen (51, 52) sich in Richtung ihrer Öffnungen (55) trichter- oder kegelartig aufweiten.

21. Spannvorrichtung nach einem der Ansprüche 18 bis 20, dadurch gekennzeichnet,

daß der Durchmesser der Sackbohrungen (51, 52) an ihrem Grund etwa dem Durchmesser des Federteils (50) entspricht.

22. Spannvorrichtung nach einem der Ansprüche 18 bis 21, dadurch gekennzeichnet,

daß das Federteil (50) an einem seiner Enden (56, 57) in der entsprechenden Sackbohrung (51, 52) festgelegt ist.

23. Spannvorrichtung nach einem der Ansprüche 18 bis 21, dadurch gekennzeichnet,

daß das Federteil (50) an einem der Enden (56, 57) in den jeweils entsprechenden Sackbohrungen (51, 52) festgelegt ist.

24. Spannvorrichtung nach einem der Ansprüche 20 bis 23, dadurch gekennzeichnet,

daß in Spannposition das Federteil (50) über seine Gesamtlänge im Bereich der beiden Sackbohrungen (51, 52) an sich wechselseitig gegenüberliegenden Seitenwänden (59, 60) der beiden Sackbohrungen (51, 52) anliegt.

25. Spannvorrichtung nach einem der Ansprüche 18 bis 24, dadurch gekennzeichnet,

daß die beiden Sackbohrungen (51, 52) konzentrisch zur Rotationsachse (53, 54) der Druckschraube (15) bzw. der Kugel (14) verlaufen.

26. Spannvorrichtung nach einem der Ansprüche 18 bis 25, dadurch gekennzeichnet,

daß die Länge des Federteils (50) im wesentlichen der Summentiefe der beiden Sackbohrungen (51, 52) entspricht.

27. Spannvorrichtung nach einem der Ansprüche 18 bis 26, dadurch gekennzeichnet,

daß in ausgelenkter Spannposition der Kugel (14) die Öffnungen (55) der beiden Sackbohrungen (51, 52) einen Überschneidungsbereich aufweisen, dessen Flächeninhalt und Form im wesentlichen dem Querschnitt des Federteils (50) entspricht.

## Revendications

1. Dispositif de serrage pour serrer des outils (1) dans un support (2), en particulier dans une tête revolver ou dans une broche d'entraînement d'une machine-outil, dans lequel l'outil (1) peut être emmanché par une queue arrière ajustée (3) dans un perçage ajusté (4) du support (2), qui est entouré par un collet annulaire (12) et qui contient l'axe (5) du système confondu avec l'axe du perçage, et peut être bloqué sans ce perçage par des organes de blocage, un corps de verrouillage (7) muni de surfaces inclinées (9, 10) à ses extrémités frontales étant à cet effet monté mobile en translation dans la direction radiale dans un évidement transversal radial traversant (6) de la queue ajustée (3), corps dont les deux surfaces inclinées (9, 10) forment chacune avec l'axe (5) du système un angle aigu (11) qui se ferme en direction de l'outil (1) à serrer, cependant qu'il est prévu pour le serrage au moins une vis de pression que l'on visse radialement de l'extérieur à travers le collet annulaire (12), caractérisé en ce que, pour le serrage de l'outil (1), au moins l'une des deux surfaces inclinées (9, 10) de forme plane du corps de verrouillage (7) peut être attaquée par une bille (14) montée mobile dans la direction radiale et bloquée en translation dans la direction axiale, bille qui

— prend appui à l'extrémité frontale de la vis de pression (15), en pouvant tourner dans une cuvette de portée (16) et y est logée de façon à être imperdable, et

— sollicite la surface inclinée plane (9, 10) avec une surface coupée plane (13) (figures 1, 2).

2. Dispositif de serrage selon la revendication 1, caractérisé en ce que deux billes (14) sont disposées à l'extrémité frontale de deux vis de pression (15) que l'on visse radialement de l'extérieur à travers le collet annulaire (12) et sont contenues dans ces vis de façon à être imperdables.

3. Dispositif de serrage selon la revendication 2, caractérisé en ce qu'une des deux vis de pression (15) est assemblée au collet annulaire (12) dans la position vissée par une liaison de cohésion de matière, notamment par collage.

4. Dispositif de serrage selon une des revendications 1 à 3, caractérisé en ce que la vis de pression (15) est une tige filetée qui peut être emboîtée dans la surface périphérique du collet annulaire (12).

5. Dispositif de serrage selon la revendication 1, caractérisé en ce que les deux angles (11) que les deux surfaces inclinées (9, 10) forment respectivement avec l'axe (5) du système sont égaux.

6. Dispositif de serrage selon la revendication 5, caractérisé en ce que le corps de verrouillage (7) est mobile en translation sur une distance limitée dans la direction longitudinale de l'évidement transversal (6), de telle manière qu'il ne puisse faire saillie radialement au-delà de la queue ajustée (3) que par une seule surface inclinée (9 ou 10).

7. Dispositif de serrage selon la revendication 6, caractérisé en ce que le corps de verrouillage (7) est monté mobile en translation dans la direction radiale dans l'évidement transversal (6).

8. Dispositif de serrage selon la revendication 7, caractérisé en ce que l'évidement transversal (6) est un perçage et le corps de verrouillage (7) est une tige cylindrique.

9. Dispositif de serrage selon une ou plusieurs des revendications précédentes, caractérisé en ce que le corps de verrouillage (7) est muni en son milieu d'une rainure annulaire (19) ou bien est traversé radialement par un perçage traversant (20)

— qui est en coïncidence avec un perçage axial de fluide de refroidissement (21) pratiqué dans la queue ajustée (3) (figures 1, 3).

10. Dispositif de serrage selon une ou plusieurs des revendications précédentes, caractérisé en ce que le corps de verrouillage (7) est divisé en deux parties, cependant qu'à chaque corps partiel (22, 23) est associée, sur son côté extérieur, une surface inclinée (9, 10) et les plans de coupe (24) des deux corps partiels (22, 23) forment un angle aigu (25) avec l'axe longitudinal (5) du perçage ajusté (4) et sont en appui l'un contre l'autre (figure 4).

11. Dispositif de serrage selon une des revendications 1 à 9, caractérisé en ce que le corps de verrouillage (7) est divisé en deux parties et que les surfaces de coupe (29, 30) qui sont dirigées l'une vers l'autre forment entre elles un angle aigu (31) et peuvent être écartées l'une de l'autre par un organe de serrage (32) en forme de coin, qui est mobile en translation longitudinale dans la direction axiale de la queue ajustée (3).

12. Dispositif de serrage selon la revendication 11, caractérisé en ce que les surfaces de coupe (29, 30) forment ensemble un angle aigu (31) qui s'ouvre en direction de l'outil (1).

13. Dispositif de serrage selon la revendication 11 ou 12, caractérisé en ce que les surfaces inclinées (34, 35) de l'organe de serrage (32) sont appuyées à plat contre les surfaces de coupe (29, 30) des corps de verrouillage (27, 28) qui sont dirigées l'une vers l'autre (figure 6).

14. Dispositif de serrage selon une des revendications 11 à 13, caractérisé par le caractère auto-bloquant de l'interposition en coin de l'organe de serrage (32) entre les corps de verrouillage (28, 29).

15. Dispositif de serrage selon une ou plusieurs des revendications précédentes, caractérisé en ce que, pour établir un blocage s'opposant à une rotation relative, une denture de Hirth (denture plane à encoches) (36) est prévue dans la région de la surface d'appui axiale du collet annulaire (12) du support (2) et contre une surface conjuguée de l'outil (1) (figure 7).

16. Dispositif de serrage selon une ou plusieurs des revendications précédentes, caractérisé en ce que les extrémités frontales du corps de verrouillage (7) ou des corps partiels (22, 23; 27, 28) du corps de verrouillage sont munies, sur le côté qui tourne le dos à l'outil, de plans inclinés opposés (37, 38) qui s'ouvrent vers l'outil (1) (figures 1, 3, 4, 6).

17. Dispositif de serrage selon une ou plusieurs des revendications précédentes, caractérisé en ce qu'il est prévu, pour agir entre la vis de pression (15) et la bille (14), un élément de rappel possédant l'élasticité d'un ressort et qui, dans l'état débloqué du dispositif de serrage, oriente la bille (14) de manière que le plan de sa surface coupée (13) soit à peu près parallèle à l'axe (5) du système (figures 7, 8, 9).

18. Dispositif de serrage selon la revendication 17, caractérisé en ce que l'élément de rappel est un ressort (50) de forme allongée, qui développe, en présence d'une sollicitation de flexion, un couple de rappel tendant à le redresser et qui est encastré par ses deux extrémités respectivement dans deux perçages borgnes (51, 52) pratiqués respectivement dans la bille (14) et dans la cuvette de portée (16) et qui débouchent coaxialement l'un vers l'autre dans la position de repos de la bille (14).

19. Dispositif de serrage selon la revendication 18, caractérisé en ce que le ressort (50) est un ressort hélicoïdal.

20. Dispositif de serrage selon la revendication 18 ou 19, caractérisé en ce que les deux perçages borgnes (51, 52) s'élargissent en entonnoir ou en cône vers leur ouverture (55).

21. Dispositif de serrage selon une des revendications 18 à 20, caractérisé en ce que le diamètre des perçages borgnes (51, 52) mesuré à leur fond correspond à peu près au diamètre du ressort (50).

22. Dispositif de serrage selon une des revendications 18 à 21, caractérisé en ce que le ressort (51) est bloqué à l'une de ses extrémités (56, 57) dans le perçage borgne (51, 52) correspondant.

23. Dispositif de serrage selon une des revendications 18 à 21, caractérisé en ce que le ressort (50) est immobilisé à une de ses extrémités (56, 57) dans le perçage borgne (51, 52) qui lui correspond respectivement.

24. Dispositif de serrage selon une des revendications 20 à 23, caractérisé en ce que, dans la position de serrage, le ressort (50) est en appui sur toute sa longueur dans la région des deux perçages borgnes (51, 52) contre les parois latérales alternées (59, 60) des deux perçages borgnes (51, 52).

25. Dispositif de serrage selon une des revendications 18 à 24, caractérisé en ce que les deux perçages borgnes (51, 52) s'étendent concentriquement à l'axe de rotation (53, 54) de la vis de pression (15) ou de la bille (14).

26. Dispositif de serrage selon une des revendications 18 à 25, caractérisé en ce que la longueur du ressort (50) correspond sensiblement à la somme des profondeurs des deux perçages borgnes (51, 52).

27. Dispositif de serrage selon une des revendications 18 à 26, caractérisé en ce que, dans la position de serrage désalignée des billes (14), les ouvertures (55) des deux perçages borgnes (51, 52) présentent une zone d'intersection dont l'aire et la forme correspondent sensiblement à la section du ressort (50).

**Claims**

1. Clamping device for the clamping of tools (1) in a carrier (2), in particular in a turret head or in a drive spindle of a machine tool, in which the tool (1) can be plugged with a rear fitting pin (3) into a fitting bore hole (4) of the carrier (2), said fitting bore hole (4) being surrounded by an annular flange (12) and containing the system axis (5) as bore hole axis, and in which it can be clamped firmly by blocking members, for which purpose a locking body (7), provided at its front ends with sloping surfaces (9, 10), is mounted displaceably in the radial direction in a continuous radial transverse recess (6) of the fitting pin (3), the two sloping surfaces (9, 10) of which locking body each form an acute angle (11) with the system axis (5), said angle closing in the direction towards the tool (1) to be clamped, at least one pressure screw being provided for clamping which can be screwed radially from the outside through the annular flange (12), characterized in that, for the clamping of the tool (1), at least one of the two flat sloping surfaces (9, 10) of the locking body (7) can be butted by a ball (14) which is held nondisplaceably in the axial direction and movably in the radial direction, which ball is supported rotatably in a step bearing (16) at the front end of the pressure screw (15) and lies captively inside and butts the flat sloping surface (9, 10) with a flat capped surface (13) (Figs. 1, 2).

2. Clamping device according to Claim 1, characterized in that two balls (14) are arranged at the front end of two pressure screws (15), which can be screwed radially from the outside through the annular flange (12), and lie captively inside.

3. Clamping device according to Claim 2, characterized in that one of the two pressure screws (15) is connected integrally, in particular bonded, to the annular flange (12) in screwed-in position.

4. Clamping device according to one of Claims 1 to 3, characterized in that the pressure screw (15) is a threaded pin which can be countersunk in the circumferential surface of the annular flange (12).

5. Clamping device according to Claim 1, characterized in that the two angles (11) formed in each case by the two sloping surfaces (9, 10) with the system axis (5) are of equal size.

6. Clamping device according to Claim 5, characterized in that the locking body (7) is only limitedly displaceable in the longitudinal direction of the transverse recess (6) in such a way that it can only protrude radially over the fitting pin (3) with just one sloping surface (9 or 10).

7. Clamping device according to Claim 6, characterized in that the locking body (7) is mounted in the transverse recess (6) securely against rotation and displaceably in the radial direction.

8. Clamping device according to Claim 7, characterized in that the transverse recess (6) is a bore hole and the locking body (7) is a cylindrical bolt.

9. Clamping device according to one or more of the preceding claims, characterized in that the locking body (7) is provided in the centre with an annular groove (19) or is penetrated radially by a passage bore hole (20), which is congruent with an axial coolant bore hole (21) in the fitting pin (3) (Figs. 1, 3).

10. Clamping device according to one or more of the preceding claims, characterized in that the locking body (7) is divided into two parts, a sloping surface (9, 10) being assigned to each partial body (22, 23) on its outside and the planes of division (24) of the two partial bodies (22, 23) forming an acute angle (25) with the longitudinal axis (5) of the fitting bore hole (4) and being adjacent to one another (Fig. 4).

11. Clamping device according to one of Claims 1 to 9, characterized in that the locking body (7) is divided into two parts, and in that the division surfaces (29, 30) facing each other together form an acute angle (31) and can be spread apart by a wedge-like clamping member (32) which is displaceable longitudinally in the axial direction of the fitting pin (3).

12. Clamping device according to Claim 11, characterized in that the division surfaces (29, 30) together form an acute angle (31) opening in the direction towards the tool (1).

13. Clamping device according to Claim 11 or 12, characterized in that the wedge surfaces (34, 35) of the clamping member (32) rest in the same plane on the mutually facing division surfaces (29, 30) of the locking bodies (27, 28) (Fig. 6).

14. Clamping device according to one of Claims 11 to 13, characterized by a self-locking device of the intermediate wedge layer of the clamping member (32) between the locking bodies (28, 29).

15. Clamping device according to one or more of the preceding claims, characterized in that a serration (crown gear) (36) is arranged in the region of the axial contact surface between the annular flange (12) of the carrier (2) and the counter-surface of the tool (1) for fixing against a relative rotation (Fig. 7).

16. Clamping device according to one or more of the preceding claims, characterized in that the front ends of the locking body (7) or of the partial bodies (22, 23; 27, 28) of the locking body are provided on their side facing away from the tool with counter-sloping surfaces (37, 38) which open in the direction towards the tool (1) (Figs. 1, 3, 4, 6).

17. Clamping device according to one or more of the preceding claims, characterized in that a resilient resetting element is effective between the pressure screw (15) and the ball (14), which resetting element aligns the ball (14) with the plane of its capped surface (13) approximately parallel to the system axis (5) in the released state of the clamping device (Figs. 7, 8, 9).

18. Clamping device according to Claim 17, characterized in that the resetting element is an elongated spring part (50) producing a resetting moment in the stretching direction under bending stress, which spring part lies with its two ends each in a blind bore hole (51, 52) of the ball (14) and of the step bearing (16), which open out into one another on the same axis in the resting position of the ball (14).

19. Clamping device according to Claim 18, characterized in that the spring part (50) is a helical spring.

20. Clamping device according to Claim 18 or 19, characterized in that the two blind bore holes (51, 52) widen in the manner of a funnel or cone in the direction of their openings (55).

21. Clamping device according to one of Claims 18 to 20, characterized in that the diameter of the blind bore holes (51, 52) at their base corresponds approximately to the diameter of the spring part (50).

22. Clamping device according to one of Claims 18 to 21, characterized in that the spring part (50) is fixed at one of its ends (56, 57) in the corresponding blind bore hole (51, 52).

23. Clamping device according to one of Claims 18 to 21, characterized in that the spring part (50) is fixed at one of the ends (56, 57) in the relevant corresponding blind bore holes (51, 52).

24. Clamping device according to one of Claims 20 to 23, characterized in that, in the clamping position, the spring part (50) rests over its entire length in the region of the two blind bore holes (51, 52) against mutually opposite side walls (59, 60) of the two blind bore holes (51, 52).

25. Clamping device according to one of Claims 18 to 24, characterized in that the two blind bore holes (51, 52) extend concentrically to the axis of rotation (53, 54) of the pressure screw (15) or of the ball (14).

26. Clamping device according to one of Claims 18 to 25, characterized in that the length of the spring part (50) corresponds essentially to the summated depth of the two blind bore holes (51, 52).

27. Clamping device according to one of Claims 18 to 26, characterized in that, in the ejected clamping position of the bore (14), the openings (55) of the two blind bore holes (51, 52) have an overlapping region, the surface area and shape of which correspond essentially to the cross section of the spring part (50).

FIG. 1.

FIG. 2

FIG.3

FIG. 4

FIG.5

FIG.5a

FIG. 6

FIG.7

FIG. 8

FIG.9